**Europäisches Patentamt**

**European Patent Office**

**Office européen des brevets**

(19)

(11) Numéro de publication: **0 192 899**
**B1**

(12) **FASCICULE DE BREVET EUROPÉEN**

(45) Date de publication du fascicule du brevet:
04.11.87

(51) Int. Cl.⁴: **F 16 H 39/50,** F 15 B 11/16,
F 15 B 1/00

(21) Numéro de dépôt: **85400129.4**

(22) Date de dépôt: **28.01.85**

(54) **Circuit anti-calage pour un système hydraulique.**

(43) Date de publication de la demande:
**03.09.86 Bulletin 86/36**

(45) Mention de la délivrance du brevet:
**04.11.87 Bulletin 87/45**

(84) Etats contractants désignés:
**BE DE GB IT SE**

(56) Documents cité:
**FR-A-2 407 402**
**FR-A-2 476 245**
**GB-A-2 067 521**
**US-A-3 785 754**
**US-A-3 952 509**

**PROCEEDINGS OF THE NATIONAL CONFERENCE ON FLUID POWER, 21-23 octobre 1975, Chicago, Illinois, vol. XXIX, pages 604-616, US; H.D. KNOELKER et al.: "Why better controls for high-pressure hydraulics in construction machinery"**

(73) Titulaire: **POCLAIN, F-60330 Le Plessis- Belleville (FR)**

(72) Inventeur: **Laguionie, Pierre, 1, Avenue Kennedy, F-60600 Crepy- en- Valois (FR)**

(74) Mandataire: **Hoisnard, Jean- Claude, Cabinet Beau de Lomenie 55, rue d'Amsterdam, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 192 899 B1

## Description

On connaît déjà des circuits d'alimentation en fluide sous pression d'au moins un récepteur. Un tel circuit est constitué par:

- ledit au moins un récepteur,
- au moins une pompe à cylindrée variable,
- un dispositif de réglage de la cylindrée de ladite pompe à cylindrée variable,
- autant de distributeurs principaux de fluide sous pression que de récepteurs, chaque distributeur principal étant piloté, associé à l'un des récepteurs et interposé entre ce récepteur et le conduit de refoulement, dont est munie la pompe à cylindrée variable,
- une source de fluide de pilotage pour le pilotage de chaque distributeur principal, et,
- autant de manipulateurs hydrauliques que de distributeurs principaux, chaque manipulateur étant associé à l'un des distributeurs principaux et étant interposé entre ce distributeur principal et la source de fluide de pilotage, celle-ci comprenant une pompe munie d'un conduit de refoulement sur lequel est disposé un clapet de décharge taré.

Les caractéristiques susmentionnées du préambule de la revendication 1 sont aussi connues du document US-A-3 952 509 à l'exception de la disposition de la pompe principule et de la pompe de pilotage qui sont confondues en une pompe unique.

Dans un circuit de ce genre, d'une part, le moteur d'entraînement de la pompe, généralement du type "Diesel", a tendance à tourner à plein régime, même lorsque le ou les récepteurs ne sont pas alimentés en fluide sous pression, d'autre part, la régulation du débit de la pompe principale, par l'intermédiaire du seul réglage de la valeur de la cylindrée, a pour effet d'alimenter en priorité le récepteur n'exigeant que la plus basse des pressions et donc de créer un déséquilibre des alimentations des divers récepteurs.

Il paraît souhaitable de supprimer ces inconvénients et, notamment, de faire en sorte qu'un tel déséquilibre soit supprimé, en limitant simultanément les puissances absorbées par les divers récepteurs, de manière à conserver une certaine proportionnalité entre les vitesses des mouvements engendrées réellement par, ou dans ces récepteurs, et les vitesses demandées par le dispositif de commande.

L'invention poursuit ce but en ayant pour objet la disposition dans laquelle la pompe de la source de fluide de pilotage appartient à un dispositif tachymétrique délivrant une pression de pilotage dont la valeur est une fonction de la vitesse d'entraînement de la pompe à cylindrée variable, cependant que les manipulateurs hydrauliques des distributeurs principaux sont d'un type potentiométrique et comprennent, chacun, des premier et deuxième conduits internes, sur chacun desquels sont disposées deux restrictions variables de valeurs réglables, ces deux conduits internes étant raccordés, en amont des deux restrictions, à la source de fluide de pilotage, et, en aval des deux restrictions, à un échappement de fluide sans pression, tec que d'une part, chaque distributeur principal étant muni de premier et deuxième organes de pilotage d'effets antagonistes, des premiers et deuxièmes conduits de pilotage sont raccordés, le premier conduit de pilotage au premier conduit interne entre les deux restrictions disposées sur ce premier conduit interne, et au premier organe de pilotage, le deuxième conduit de pilotage au deuxième conduit interne, entre les deux rrestrictions disposées sur ce deuxième conduit interne, et au deuxième organe de pilotage, la commande unique du manipulateur étant susceptible de réaliser le réglage progressif des valeurs des restrictions disposées sur les premiers et deuxièmes conduits internes, selon au moins les trois configurations suivantes: a) en l'absence d'action sur ladite commande unique, les deux restrictions amont ont leurs ouvertures minimales et les deux restrictions aval ont leurs ouvertures maximales; b) la commande unique étant soumise à une action dans un premier sens, les ouvertures de la restriction amont du premier conduit interne et de la restriction aval du deuxième conduit interne sont maximales, et, les ouvertures de la restriction aval du premier conduit interne et de la restriction amont du deuxième conduit interne sont minimales; et, c) la commande unique étant soumise à une action dans un deuxième sens, les ouvertures de la restriction amont du deuxième conduit interne et de la restriction aval du premier conduit interne sont maximales, et, les ouvertures de la restriction aval du deuxième conduit interne et de la restriction amont du premier conduit interne sont minimales.

Les avantageuses dispositions siuvantes sont, en outre, de préférence adoptées:

- le circuit comprend au moins deux récepteurs de fluide;
- la pompe de la source de fluide de pilotage est du type tachymétrique et est attelée au même arbre d'entraînement que la pompe à cylindrée variable; cependant que la source de fluide de pilotage comprend également une restriction disposée sur le conduit de refoulement de la pompe tachymétrique entre celle-ci et le clapet de décharge taré, et, un distributeur de modulation de pression, à deux positions, relié, par un conduit d'alimentation à la partie du conduit de refoulement de la pompe tachymétrique comprise entre la restriction et le clapet de décharge taré, par un conduit de pilotage relié à chaque manipulateur, et, par un conduit de décharge à un échappement sans pression, les divers manipulateurs étant raccordés en parallèle audit conduit de pilotage; et que d'une part, le distributeur de modulation de pression est attelé à deux vérins à fluide d'effets antagonistes, reliés aux parties du conduit de refoulement de la pompe tachymétrique comprises, l'un de ces vérins entre ladite pompe et la restriction, l'autre vérin entre la restriction et le chapet de décharge taré, d'autre part, les deux positions du distributeur de modulation de pression correspondent, la première position à la mise en communication des conduits d'alimentation et de pilotage, la deuxième position à la mise en communication des conduits de pilotage et de décharge les sections actives des deux vérins et la restriction ayant des valeurs choisies, de manière que le distributeur de modulation de pression soit placé dans sa première position lorsque la vitesse d'entraînement de la pompe tachymétrique est égale à la vitesse nominale prévue, et, dans sa deuxième position lorsque la vitesse d'entraînement de la pompe tachymétrique est inférieure à la vitesse nominale.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels:
- la figure 1 est le schéma d'un circuit d'alimentation conforme à l'invention;
- les figures 2 et 3 représentent deux autres positions d'un des manipulateurs de la figure 1.

Le circuit représenté comporte:
- une pompe principale 1, à cylindrée variable, munie d'un levier de réglage 2 de sa cylindrée,
- une pompe tachymétrique 3,
- deux roues d'engrenages 4 engrènant entre elles et solidaires en rotation l'une de la pompe 1, l'autre de la pompe 3,
- un moteur "Diesel" 5 d'entraînement des deux pompes dont l'arbre d'entraînement 6 est solidaire en rotation de l'arbre de la pompe 1,
- un réservoir de fluide 7, auquel sont reliés les conduits d'aspiration 8 et 9 des pompes 1 et 3, respectivement,
- deux circuits d'utilisation 10 et 11, ou récepteurs de fluide 10, 11,
- deux distributeurs principaux de fluide sous pression 12, 13, chacun à trois positions et correspondant aux récepteurs 10, 11, respectivement,
- deux manipulateurs hydrauliques 14, 15, qui correspondent, respectivement, aux distributeurs principaux 12, 13,
- un vérin de commande de cylindrée 16, qui est constitué par un vérin à deux chambres 17, 18, attelé au levier de réglage 2 de la cylindrée de la pompe 1, la chambre 17 étant reliée au conduit de refoulement 19 de la pompe 1 par un conduit 20, la chambre 18 étant reliée à un distributeur de fluide à deux positions 21 par un conduit 22.

Un conduit 23 relie le distributeur 21 au conduit de refoulement 19, un conduit 24 reliant ce distributeur au réservoir 7. Le distributeur 21 est attelé à deux vérins 25, 26 de réglage de sa position, d'effets antagonistes, et à un ressort 27 de rappel du distributeur dans sa deuxième position, de même effet que le vérin 26. Le vérin 25 est relié par un conduit 28 au conduit 19 et le vérin 26 est relié par un conduit 29, au distributeur principal 13, et, par un conduit 30, raccordé au conduit 29, au distributeur principal 12.

Les deux positions du distributeur de fluide 21 correspondent:
- la première position, à la prépondérance de l'effet du vérin 25, à la mise en communication des conduits 22 et 23, et à l'obturation du conduit 24; et,
- la deuxième position, à la prépondérance de l'effet du vérin 26, à la mise en communication des conduits 22 et 24, et à l'obturation du conduit 23.

Il doit encore être noté que le vérin de commande 16 associé au distributeur 21 a pour effet de modifier la position du levier de réglage 2 de la cylindrée en fonction de la variation de la pression contenue dans le conduit 20, donc également dans le conduit de refoulement 19.

Chaque manipulateur 14, 15 est constitué schématiquement par deux ensembles de restrictions, comprenant chacun deux restrictions de valeurs réglables 48, 49, respectivement 50, 51, placées sur un conduit 35, respectivement 36. Les organes de réglage 48a, 49a d'une part, 50a, 51a d'autre part, de ces restrictions sont attelés à un levier de commande 35a, 36a, respectivement. Les conduits 35 et 36 d'un manipulateur sont raccordés à leurs extrémités respectives, ainsi que, d'une part, à un conduit d'alimentation en fluide de pilotage, entre les restrictions 48 et 50, -conduit 38 du manipulateur 15, conduit raccordé au conduit 38, en ce qui concerne le manipulateur 14-, d'autre part, à un conduit 39, entre les restrictions 49, 51, conduit 39 relié au réservoir 7. Un conduit 40 relie la partie du conduit 35 du manipulateur 14 comprise entre les restrictions 48 et 49 à un vérin de pilotage 41 du distributeur principal 12; un conduit 42 relie la partie du conduit 36 du manipulateur 14 comprise entre les restrictions 50 et 51 à un autre vérin de pilotage 43 attelé au même distributeur principal 12, d'effet antagoniste du vérin 41; un conduit 44 relie la partie du conduit 35 du manipulateur 15 comprise entre les restrictions 48 et 49 à un vérin de pilotage 45 du distributeur principal 13; et, un conduit 46 relie la partie du conduit 36 du manipulateur 15 comprise entre les restrictions 50 et 51 à un autre vérin de pilotage 47 attelé au même distributeur principal 13, d'effet antagoniste du vérin 45.

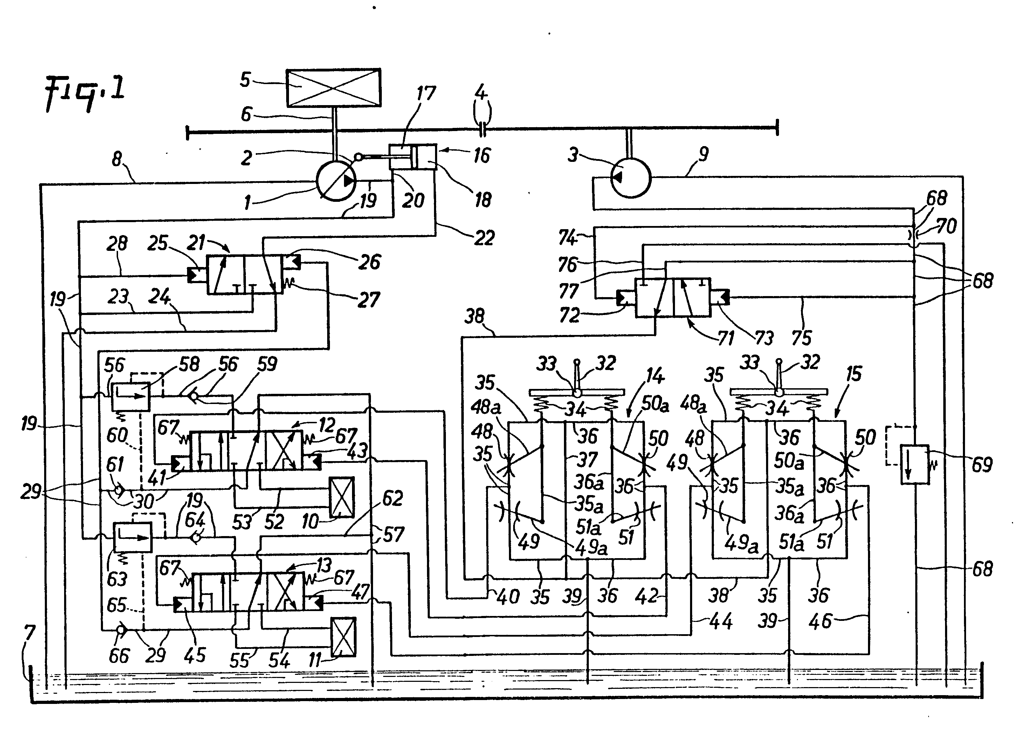

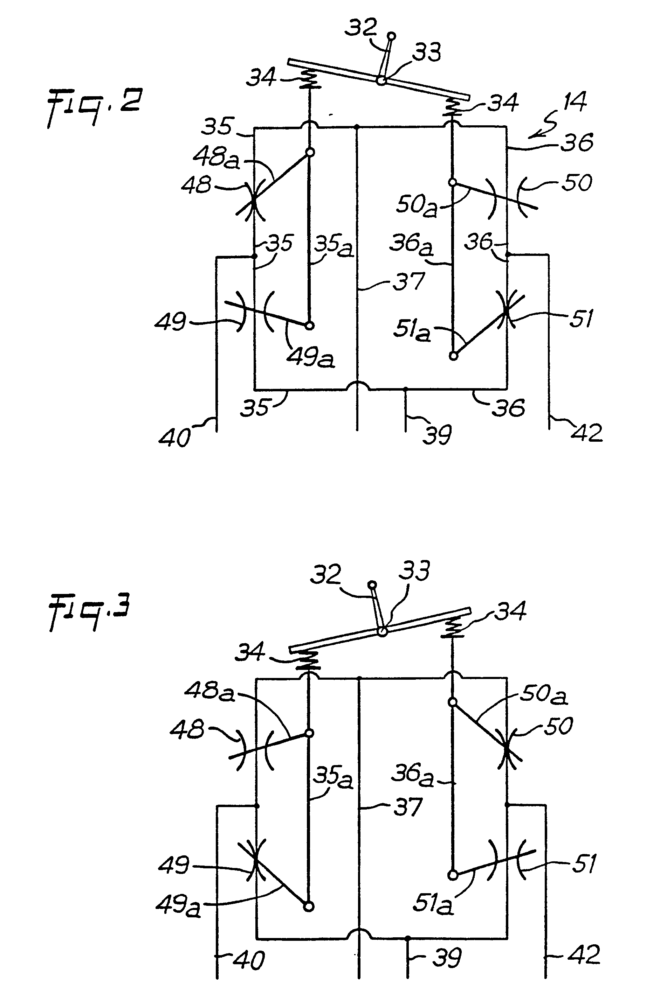

Chaque manipulateur comporte un levier de commande unique 32 des leviers 35a, 36a pivotant autour d'un axe 33, avec des ressorts 34 interposés entre le levier 32 et le levier 35a, et, entre le levier 32 et le levier 36a. Les restrictions 48, 49, 50, 51 sont progressives et possèdent les positions remarquables suivantes:
- celles de la figure 1, dans laquelle les leviers 32 sont en position neutre, les restrictions 48 et 50 étant complètement fermées, les restrictions 49 et 51 étant au contraire ouvertes entièrement;
- celles de la figure 2, dans laquelle le levier 32 du manipulateur 14 a été pivoté vers le levier 36a, les restrictions 48 et 51 étant entièrement fermées, et, les restrictions 49 et 50 étant entièrement ouvertes; et,

- celles de la figure 3, dans laquelle le levier 32 du manipulateur 14 a été pivoté vers le levier 35a, les restrictions 48 et 51 étant entièrement ouvertes, et, les restrictions 49 et 50 étant entièrement fermées.

> Ces diverses dispositions font, par ailleurs, que les manipulateurs 14 et 15 sont d'un type potentiométrique.

Chaque circuit d'utilisation 10, 11 est relié par deux conduits 52, 53, respectivement 54, 55, au distributeur principal associé 12, 13.

Le distributeur principal 12 est en outre relié, par un conduit 56 au conduit 19 et par un conduit 57 au réservoir 7. Une valve de régulation de pression 58 et un clapet de non-retour 59 sont disposés sur le conduit 56, le clapet de non-retour 59 permettant le passage du fluide vers le distributeur principal 12. La valve 58 est en outre pilotée (conduit 60) par la pression du fluide contenu dans le conduit 30. Un clapet de non-retour 61 est disposé sur ce conduit 30, entre les raccordements des conduits 60 et 29, et permet le passage du fluide du distributeur principal 12 vers le conduit 29.

Le distributeur principal 13 est relié par un conduit 62 au conduit 57. Une valve de régulation de pression 63 et un clapet de non-retour 64 sont disposés sur la partie du conduit 19 comprise entre le raccordement du conduit 56 et le distributeur principal 13, le clapet de non-retour 64 permettant le passage du fluide vers le distributeur principal 13. La valve de régulation de pression 63 est pilotée (conduit 65) par la pression du fluide contenu dans la partie du conduit 29 comprise entre le distributeur principal 13 et le raccordement du conduit 30. Un clapet de non-retour 66 est placé sur cette partie du conduit 29, entre les raccordements des conduits 65 et 30, et permet le passage du fluide provenant du distributeur principal 13.

Chaque distributeur principal 12, 13 est en outre attelé à des ressorts 67 de rappel dans sa deuxième position définie ci-après.

Les trois positions du distributeur principal 12 correspondent:
- la première position, aux mises en communication des conduits 56, 53 et 30, et, des conduits 52 et 57;
- la deuxième position, à la mise en communication des conduits 30 et 57, et, à l'obturation des conduits 52, 53, 56; et,
- la troisième position, aux mises en communication des conduits 56, 52 et 30, et, des conduits 53 et 57.

Les trois positions du distributeur principal 13 correspondent:
- la première position, aux mises en communication des conduits 19, 55 et 29, et, des conduits 54 et 62;
- la deuxième position, à la mise en communication des conduits 29 et 62, et, aux obturations des conduits 19, 54 et 55; et,
- la troisième position, aux mises en communication des conduits 19, 29 et 54, et, des conduits 55 et 62.

Le conduit de refoulement 68 de la pompe tachymétrique 3 est relié au réservoir 7, un clapet de décharge taré 69 étant disposé sur ce conduit 68, ainsi qu' une restriction 70 placée entre la pompe 3 et le clapet de décharge 69. Un distributeur de deux positions 71, du type progressif, est attelé à deux vérins d'effets antagonistes 72 et 73, eux-mêmes reliés, le vérin 72, par un conduit 74, à la partie du conduit 68 comprise entre la pompe 3 et la restriction 70, et, le vérin 73, par un conduit 75, à la partie du conduit 68 comprise entre la restriction 70 et le clapet de décharge 69. Par ailleurs, le conduit 38 est raccordé au distributeur 71, et des conduits 76, 77 relient ce distributeur, le conduit 76 au réservoir 7, et, le conduit 77 à la partie du conduit 68 comprise entre la restriction 70 et le clapet de décharge 69.

Les deux positions du distributeur 71 correspondent:
- la première position, à la mise en communication des conduits 77 et 38, et, à l'obturation du conduit 76; et,
- la deuxième position, à la mise en communication des conduits 38 et 76, et, à l'obturation du conduit 77.

Le fonctionnement de l'ensemble du circuit qui vient d'être décrit va maintenant être exposé.

La puissance nécessaire à l'entraînement de la pompe principale 1 est limitée à une valeur déterminée par action du vérin de commande 16. Ainsi, si la pression d'alimentation des circuits d'utilisation 10, 11 augmente le débit d'alimentation maximal diminue.

Mais, en outre, les pressions des fluides de pilotage des distributeurs principaux 12, 13, fluides contenus dans les conduits 40, 42, 44, 46, sont elles-mêmes réglées à des valeurs, fonctions de la vitesse d'entraînement de la pompe tachymétrique 3. En effet, ces pressions sont, en première approximation, proportionnelles à la valeur de la pression dans le conduit 38. Or, cette valeur de la pression dans le conduit 38 est modulée en fonction de la vitesse d'entraînement de la pompe 3, et donc également en fonction de la vitesse de rotation de l'arbre moteur 6 du moteur "Diesel" 5. Deux cas de fonctionnement distincts peuvent être observés.

Dans le premier cas de fonctionnement, la vitesse d'entraînement de la pompe 3 est égale à la vitesse nominale prévue. Les valeurs des sections utiles des vérins 72 et 73, et de la restriction 70 ont été choisies de manière que, lorsque la pompe 3 tourne à sa vitesse nominale, le distributeur 71 soit placé dans sa première position. La pression dans le conduit 38 est alors égale à celle dans le conduit 77, et a sa valeur nominale. Ceci est normal car le moteur "Diesel" 5 tournant à sa vitesse nominale montre que l'entraînement de la pompe 1 n'exige pas une puissance d'entraînement supérieure à la puissance maximale que peut fournir le moteur 5.

Par contre, le deuxième cas de fonctionnement est celui où la puissance du moteur "Diesel" tend à devenir inférieure à la puissance d'entraînement de la pompe 1, ce qui a pour conséquence une diminution de la vitesse de rotation de la pompe 3. La pression baisse dans le conduit 74, ce qui a pour effet de rendre momentanément prépondérant l'effet du vérin 73 et de placer le distributeur 71 dans sa deuxième position. Le conduit 38 étant mis en communication avec le conduit 76, la pression du fluide qu'il contient baisse, comme baissent également les pressions des fluides dans les conduits 40, 42, 44 et 46, et, par conséquent, dans les vérins 41, 43, 45 et 47. Ceci a pour effet final de réduire dans des proportions semblables les alimentations en fluide sous pression des circuits d'utilisation 10 et 11, et de faire augmenter la perte de charge entre les conduits 56 et 53 ou 52, donc, la pression dans le conduit 19. Le distributeur 21 est alors soumis à l'effet prépondérant du vérin 25 qui met le conduit 22 en communication avec le conduit 23 entraînant une diminution de la cylindrée de la pompe, donc du couple résistant.

Dans les ensembles ne comportant que le vérin de commande 16, sans comporter la régulation tachymétrique (pompe 3), les distributeurs principaux 12, 13 sont pilotés par des fluides dont les pressions sont fonction d'une pression d'admission constante (et maximale) des manipulateurs 14 et 15, de sorte qu'étant placés pour alimenter les circuits d'utilisation par les conduits 52 ou 53, et, 54 ou 55, ils placent ces conduits en communication non réduite avec les conduits 56 et 19, donc avec le conduit 19, dont le fluide est dirigé naturellement vers celui des circuits d'utilisation 10, 11 exigeant la plus faible pression. Contrairement à ce fonctionnement antérieur connu et désavantageux, la nouvelle disposition permet de réduire les communications des conduits 52 ou 53, et, 54 ou 55 avec le conduit 19 et par conséquent, d'alimenter avec un certain débit même celui des circuits d'utilisation 10, 11 exigeant la pression la plus élevée.

Dans les circuits ne comportant qu'un seul récepteur de fluide, il est par ailleurs possible d'éviter l'emballement du moteur 5, lorsque ce récepteur n'est pas alimenté en fluide sous pression.

**Revendications**

1. Circuit d'alimentation en fluide sous pression d'au moins un récepteur (10, 11), constitué par:
   - ledit au moins un récepteur (10, 11),
   - au moins une pompe à cylindrée variable (1),
   - un dispositif (16-21) de réglage de la cylindrée de ladite pompe à cylindrée variable,
   - autant de distributeurs principaux (12, 13) de fluide sous pression que de récepteurs, chaque distributeur principal (12, 13) étant piloté (41-43, 45-47), associé à l'un des récepteurs (10, 11) et interposé entre ce récepteur et le conduit de refoulement (19), dont est munie la pompe (1) à cylindrée variable,
   - une source de fluide de pilotage (38) pour le pilotage de chaque distributeur principal, et,
   - autant de manipulateurs hydrauliques (14, 15) que de distributeurs principaux (12, 13), chaque manipulateur étant associé à l'un des distributeurs principaux et étant interposé entre ce distributeur principal (12, 13) et la source de fluide de pilotage (38),

la source de fluide de pilotage comprenant une pompe (3) munie d'un conduit de refoulement (68) sur lequel est disposé un clapet de décharge taré (69),

caractérisé en ce que la pompe (3) de la source de fluide de pilotage appartient à un dispositif tachymétrique délivrant une pression de pilotage dont la valeur est une fonction de la vitesse d'entraînement de la pompe à cylindrée variable (1), cependant que les manipulateurs hydrauliques (14, 15) des distribureurs principaux (12, 13) sont d'un type potentiométrique et comprennent, chacun, des premier (35) et deuxième (36) conduits internes, sur chacun desquels sont disposées deux restrictions variables (48, 49; 50, 51) de valeurs réglables, ces deux conduits internes étant raccordés, en amont des deux restrictions, à la source de fluide de pilotage (37; 38), et, en aval des deux restrictions, à un échappement de fluide sans pression (39), et que, d'une part, chaque distributeur principal (12; 13) étant muni de premier (41; 45) et deuxième (43; 47) organes de pilotage d'effets antagonistes, des premiers et deuxièmes conduits de pilotage sont raccordés, le premier conduit de pilotage (40; 44) au premier conduit interne (35) entre les deux restrictions (48, 49) disposées sur ce premier conduit interne, et au premier organe de pilotage (41; 45), le deuxième conduit de pilotage (42; 46), au deuxième conduit interne (36), entre les deux restrictions (50, 51) disposées sur ce deuxième conduit interne, et au deuxième organe de pilotage (43; 47), la commande unique (32) du manipulateur (14; 15) étant susceptible de réaliser le réglage progressif des valeurs des restrictions disposées sur les premiers et deuxièmes conduits internes, selon au moins les trois configurations suivantes:

a) en l'absence d'action sur ladite commande unique (32; figure 1), les deux restrictions amont (48, 50) ont leurs ouvertures minimales et les deux restrictions aval (49, 51) ont leurs ouvertures maximales;

b) la commande unique étant soumise à une action dans un premier sens (figure 3), les ouvertures de la restriction amont (48) du premier conduit interne (35) et de la restriction aval (51) du deuxième conduit interne (36) sont maximales, et, les ouvertures de la restriction aval (49) du premier conduit interne (35) et de la restriction amont (50) du deuxième conduit interne (36) sont minimales; et,

c) la commande unique étant soumise à une action dans un deuxième sens (figure 2), les ouvertures de la restriction amont (50) du deuxième conduit interne (36) et de la restriction aval (49) du premier conduit interne (35) sont maximales, et, les ouvertures de la restriction aval (51) du deuxième conduit interne (36) et de la restriction amont (48) du premier conduit interne (35) sont minimales.

2. Circuit selon la revendication 1, caractérisé en ce qu'il comprend au moins deux récepteurs (10, 11) de fluide.

3. Circuit selon l'une quelconque des revendications 1 et 2, caractérisé en ce que la pompe (3) de la source de fluide de pilotage est du type tachymétrique et est attelée (4) au même arbre d'entraînement (5) que la pompe à cylindrée variable (1), cependant que ladite source de fluide de pilotage comprend également une restriction (70) disposée sur le conduit de refoulement (68) de la pompe tachymétrique entre celle-ci (3) et le clapet de décharge taré (69), et, un distributeur de modulation de pression (71), à deux positions, relié, par un conduit d'alimentation (77) à la partie du conduit de refoulement (68) de la pompe tachymétrique comprise entre la restriction (70) et le clapet de décharge taré (69), par un conduit de pilotage (38, 37) relié à chaque manipulateur (14, 15), et, par un conduit de décharge (76) à un échappement sans pression (7), les divers manipulateurs étant raccordés en parallèle audit conduit de pilotage,

et que, d'une part, le distributeur de modulation de pression (71) est attelé à deux vérins à fluide (72, 73) d'effets antagonistes, reliés aux parties du conduit de refoulement (68) de la pompe tachymétrique comprises, l'un (72) de ces vérins entre ladite pompe (3) et la restriction (70), l'autre vérin (73) entre la restriction (70) et le clapet de décharge taré (69), d'autre part, les deux positions du distributeur de modulation de pression (71) correspondent, la première position à la mise en communication des conduits d'alimentation (77) et de pilotage (38), la deuxième position à la mise en communication des conduits de pilotage (38) et de décharge (76), les sections actives des deux vérins (72, 73) et la restriction (70) ayant des valeurs choisies de manière que le distributeur de modulation de pression (71) soit placé dans sa première position lorsque la vitesse d'entraînement de la pompe tachymétrique est égale à la vitesse nominale prévue, et, dans sa deuxième position, lorsque la vitesse d'entraînement de la pompe tachymétrique est inférieure à la vitesse nominale.

**Patentansprüche**

1. Druckfluid-Speisekreis für mindestens einen Empfänger (10, 11), gebildet durch:
- den mindestens einen Empfänger (10, 11),
- mindestens eine Pumpe (1) mit variablem Hubraum,

- eine Einrichtung (16-21) zur Einstellung des Hubraums der Pumpe mit variablem Hubraum,
- so viele Druckfluid-Hauptverteiler (12, 13) wie Empfänger, wobei jeder Hauptverteiler (12, 13) vorgesteuert (41-43, 45-47), mit einem der Empfänger (10, 11) verbunden und zwischen diesem Empfänger und der Förderleitung (19), mit der die Pumpe (1) mit variablem Hubraum versehen ist, zwischengeschaltet ist,
- eine Vorsteuerfluidquelle (38) für die Vorsteuerung jedes Hauptverteilers, und
- so viele hydraulische Manipulatoren (14, 15) wie Hauptverteiler (12, 13), wobei jeder Manipulator an einen der Hauptverteiler angeschlossen und zwischem diesem Hauptverteiler (12, 13) und der Vorsteuerfluidquelle (38) zwischengeschaltet ist,

wobei die Vorsteuerfluidquelle eine Pumpe (3) umfaßt, die mit einer Förderleitung (68) versehen ist, an welcher eine Tarier-Ablaßklappe (69) vorgesehen ist,

dadurch gekennzeichnet, daß die Pumpe (3) für die Vorsteuerfluidquelle zu einer Tachometer-Einrichtung gehört, die einen Vorsteuerdruck liefert, dessen Wert eine Funktion der Antriebsgeschwindigkeit der Pumpe (1) mit variablem Hubraum ist, wobei die hydraulischen Manipulatoren (14, 15) der Hauptverteiler (12, 13) des Potentiometertyps sind und jeweils eine erste (35) und eine zweite (36) Innenleitung aufweisen, an denen jeweils zwei variable Drosselungen (48, 49; 50, 51) von regulierbarem Wert angeordnet sind, wobei die beiden Innenleitungen stromaufwärts von den beiden Drosselungen mit der Vorsteuerfluidquelle (37; 38) und stromabwärts von den beiden Drosselungen mit einem Auslaß (39) für Fluid ohne Druck verbunden sind, und einerseits, da jeder Hauptverteiler (12; 13) mit einem ersten (41; 45) und einem zweiten (43; 47) Vorsteuerorgan entgegengesetzter Wirkung versehen ist, erste und eine zweite Vorsteuerleitungen verbunden sind, u.zw. die erste Vorsteuerleitung (40; 44) mit der ersten Innenleitung (35) zwischen den beiden an dieser ersten Innenleitung angeordneten Drosselungen (48, 49) und mit dem ersten Vorsteuerorgan (41; 45), die zweite Vorsteuerleitung (42; 46) mit der zweiten Innenleitung (36) zwischen den an dieser zweiten Innenleitung angeordneten Drosselungen (50, 51) und mit dem zweiten Vorsteuerorgan (43; 47), wobei die Einheitssteuerung (32) des Manipulators (14; 15) die progressive Regulierung der Werte der an den ersten und zweiten Innenleitungen angeordneten Drosselungen zumindest entsprechend den drei folgenden Konfigurationen realisieren kann:

a) in Abwesenheit einer Wirkung auf die Einheitssteuerung (32; Fig. 1) sind die Öffnungen der beiden stromaufwärtigen Drosselungen (48, 50) minimal und die Öffnungen der beiden stromabwärtigen Drosselungen (49, 51) maximal;

b) ist die Einheitssteuerung in einer ersten Richtung beaufschlagt (Fig. 3) sind die Öffnungen der stromaufwärtigen Drosselung (48) der ersten Innenleitung (35) und der stromabwärtigen Drosselung (51) der zweiten Innenleitung (36) maximal und die Öffnungen der stromabwärtigen Drosselung (49) der ersten Innenleitung (35) und der stromaufwärtigen Drosselung (50) der zweiten Innenleitung (36) minimal; und

c) ist die Einheitssteuerung in eine zweite Richtung beaufschlagt (Fig. 2), sind die Öffnungen der stromaufwärtigen Drosselung (50) der zweiten Innenleitung (36) und die stromabwärtige Drosselung (49) der ersten Innenleitung (35) maximal und die Öffnungen der stromabwärtigen Drosselung (51) der zweiten Innenleitung (36) und der stromaufwärtigen Drosselung (48) der ersten Innenleitung (35) minimal.

2. Kreis nach Anspruch 1, dadurch gekennzeichnet, daß er mindestens zwei Fluidempfänger (10, 11) umfaßt.

3. Kreis nach einem der Ansprüche 1 und 2, dadurch gekennzeichnet, daß die Pumpe (3) der Vorsteuerfluidquelle des Tachometertyps ist und an dieselbe Antriebswelle (5) wie die Pumpe (1) mit variablem Hubraum angekuppelt ist, wobei die Vorsteuerfluidquelle auch eine an der Förderleitung (68) der Tachometerpumpe zwischen dieser (3) und der Tarier-Ablaßklappe (69) angeordnete Drosselung (70) und einen Zweipositionen-Druckmodulationsverteiler (71) umfaßt, der über eine Speiseleitung (77) mit dem zwischen der Drosselung (70) und der Tarier-Ablaßklappe (69) befindlichen Teil der Förderleitung (68) der Tachometerpumpe, über eine Vorsteuerleitung (38, 37) mit jedem Manipulator (14, 15) und über eine Ablaßleitung (76) mit einem Auslaß für Fluid ohne Druck (7) verbunden ist, wobei die verschiedenen Manipulatoren zur Vorsteuerleitung parallelgeschaltet sind, und daß einerseits der Druckmodulationsverteiler (71) an zwei Fluidstelltriebe (72, 73) entgegengesetzter Wirkung angekuppelt ist, welche mit den Teilen der Förderleitung (68) der Tachometerpumpe verbunden sind, die sich bei einem (72) dieser Stelltriebe zwischen der Pumpe (3) und der Drosselung (70) und beim anderen Stelltrieb (73) zwischen der Drosselung (70) und der Tarier-Ablaßklappe (69) befinden, anderseits die beiden Positionen des Druckmodulationsverteilers (71) folgendermaßen entsprechen, die erste Position der Verbindung der Speiseleitung (77) und der Vorsteuerleitung (38), die zweite Position der Verbindung der Vorsteuerleitung (38) und der Ablaßleitung (76), wobei die aktiven Querschnitte der beiden Stelltriebe (72, 73) und die Drosselung (70) Werte haben, die so gewählt sind, daß der Druckmodulationsverteiler (71) in seine erste Position gebracht ist, wenn die Antriebsgeschwindigkeit der Tachometerpumpe gleich der vorgesehenen Nenndrehzahl ist, und in seine zweite Position gebracht ist, wenn die Antriebsgeschwindigkeit der Tachometerpumpe niedriger als die Nenndrehzahl ist.

**Claims**

1. Pressurized fluid supply circuit supplying at least one consuming part (10, 11), constituted by:
- said at least one consuming part (10, 11),
- at least one variable displacement pump (1),
- a device (16-21) for adjusting the volume of said variable displacement pump,
- as many main distributors (12, 13) of pressurized fluid as there are consuming parts, each main distributor (12, 13) being operationally coupled (41-43, 45-47) with one of said consuming parts (10, 11) and being interposed between said consuming part and the delivery pipe (19) with which said variable displacement pump is equipped,
- a source of control fluid (38) for controlling each main distributor, and,
- as many hydraulic manipulators (14, 15) as there are main distributors (12, 13), each manipulator being associated to one of the main distributors and being interposed between said main distributor (12, 13) and the source of control fluid (38), the source of control fluid comprising a pump (3) provided with a delivery pipe (68) on which is provided a calibrated discharge valve (69),

characterized in that the pump (3) of the source of control fluid is part of a tachometric device which delivers a control pressure of which the value is a function of the driving speed of the variable displacement pump (1), whereas the hydraulic manipulators (14, 15) of the main distributors (12, 13) are of a potentiometric type, each one comprising first (35) and second (36) internal pipes, on each one of which are placed two variable constrictions (48, 49; 50, 51) of adjustable value, said two internal pipes being connected, upstream from said two constrictions, with the source of control fluid (37, 38), and, downstream from said two constrictions, with a discharge of pressurized fluid (39) and in that, on the one hand, each main distributor (12, 13) being equipped with first (41, 45) and second (43, 47) opposingly operating control members, first and second control pipes are connected, the first control pipe (40, 44) to the first internal pipe (35) between the two constrictions (48, 49) provided on said first internal pipe, and the second control pipe (42, 46) to the second internal pipe (36), between the two constrictions (50, 51) provided on said second internal pipe, and to the second control member (43, 47), the single control (32) of manipulator (14, 15) being adapted to perform the progressive adjustment of the values of the constrictions provided on the first and second internal pipes, according to at least the three following configurations:

a) when the single control member (32, Figure 1) is not actuated, the two upstream constrictions (48, 50) have their minimum opening and the two downstream constrictions (49, 51) have their maximum opening;

b) when the single control member is actuated in a first direction (Figure 3), the openings of the upstream constriction (48) of the first internal pipe (35) and of the downstream constriction (51) of the second internal pipe (36) are maximum, and, the openings of the downstream constriction (49) of the first internal pipe (35) and of the upstream constriction (50) of the second internal pipe (36) are minimum; and

c) when the single control member is actuated in a second direction (Figure 2), the openings of the upstream constriction (50) of the second internal pipe (36) and of the downstream constriction (49) of the first internal pipe (35) are maximum, and, the openings of the downstream constriction (51) of the second internal pipe (36) and of the upstream constriction (48) of the first internal pipe (35) are minimum.

2. Circuit according to claim 1, characterized in that it comprises at least two fluid consuming parts (10, 11).

3. Circuit according to any one of claims 1 and 2, characterized in that the pump (3) of the source of control fluid is of the tachometric type and is coupled (4) to the same driving shaft (5) as the variable displacement pump (1), whereas said source of control fluid further comprises a constriction (70) placed on the delivery pipe (68) of the tachometric pump between the latter (3) and the calibrated discharge valve (69), and, a two-position pressure modulation distributor (71), connected, via a supply pipe (77) to the part of the delivery pipe (68) of the tachometric pump comprised between said constriction (70) and the calibrated discharge valve (69), via a control pipe (38, 37) connected to each manipulator (14, 15), and, via a discharge pipe (76) to a pressure-free exhaust (7), the various manipulators being connected in parallel to said control pipe, and in that, on the one hand, the pressure modulation distributor (71) is coupled to two fluid jacks of mutually antagonistic effect (72, 73) connected to the parts of the delivery pipe (68) of the tachometric pump comprised, one (72) of these jacks between said pump (3) and constriction (70), the other jack (73) between constriction (70) and the calibrated discharge valve (69), on the other hand, the two positions of the pressure modulation distributor (71) correspond, the first position to causing supply pipe (77) and control pipe (38) to communicate, the second position to causing control pipe (38) and discharge pipe (76) to communicate, the working sections of the two jacks (72, 73) and the constriction (70) having values which are so selected that the pressure modulation distributor (71) is placed in its first position when the driving speed of the tachometric pump is equal to the target nominal speed, and in its second position when the driving speed of the tachometric pump is less than said nominal speed.

Fig.1

Fig. 2

Fig. 3